# EUROPEAN PATENT SPECIFICATION

(11) **EP 0 985 846 B1**
(45) Date of publication and mention of the grant of the patent: **20.10.2004**
(21) Application number: 99850131.6
(22) Date of filing: 25.08.1999
(51) Int. Cl.: F16F 1/18, F16F 1/366

(54) **S-shaped spring for tools**
S-förmige Feder für Werkzeuge
Ressort en forme de S pour outils

(30) Priority: 11.09.1998 SE 9803077
(43) Date of publication of application: 15.03.2000
(73) Proprietor: Kapman AB, 811 81 Sandviken (SE)
(72) Inventor: Jansson, Conny, 723 48 Västeras (SE)
(74) Representative: Johansson Webjörn, Ingmari

(56) References cited:
- EP-A- 0 132 048
- EP-A- 0 245 099
- WO-A-88/02828
- WO-A-95/11112
- PATENT ABSTRACTS OF JAPAN vol. 10, no. 231 (M-506) [2287], 12 August 1986 (1986-08-12) & JP 61 065925 A (ISUZU MOTORS LTD), 4 April 1986 (1986-04-04)
- PATENT ABSTRACTS OF JAPAN vol. 008, no. 128 (M-302), 14 June 1984 (1984-06-14) & JP 59 029829 A (NITTO BOSEKI KK), 17 February 1984 (1984-02-17)
- D. SCOTT ET AL.: "Light van has mass-produced GRP springs" AUTOMOTIVE ENGINEERING., vol. 94, no. 2, February 1986 (1986-02), pages 113-116, XP002126210 SOCIETY OF AUTOMOTIVE ENGINEERS. WARRENDALE., US ISSN: 0098-2571

## Description

### Background

In several kinds of tools, such as pliers, return springs are used to open the tool between the operational moments. It has, however, been shown that repeated use of the tool is less exhausting if the spring force does not increase linearly when the tool is closed, but is instead relatively constant or slowly diminishing, and for this purpose S-shaped springs are suitable as is described in patents U S 4,801,019 and SE 506 068 corresponding to WO 95/11112.. An adjustment of the spring force to the operators wishes is then possible by locating the ends of the spring in various positions along the handles of the pliers.

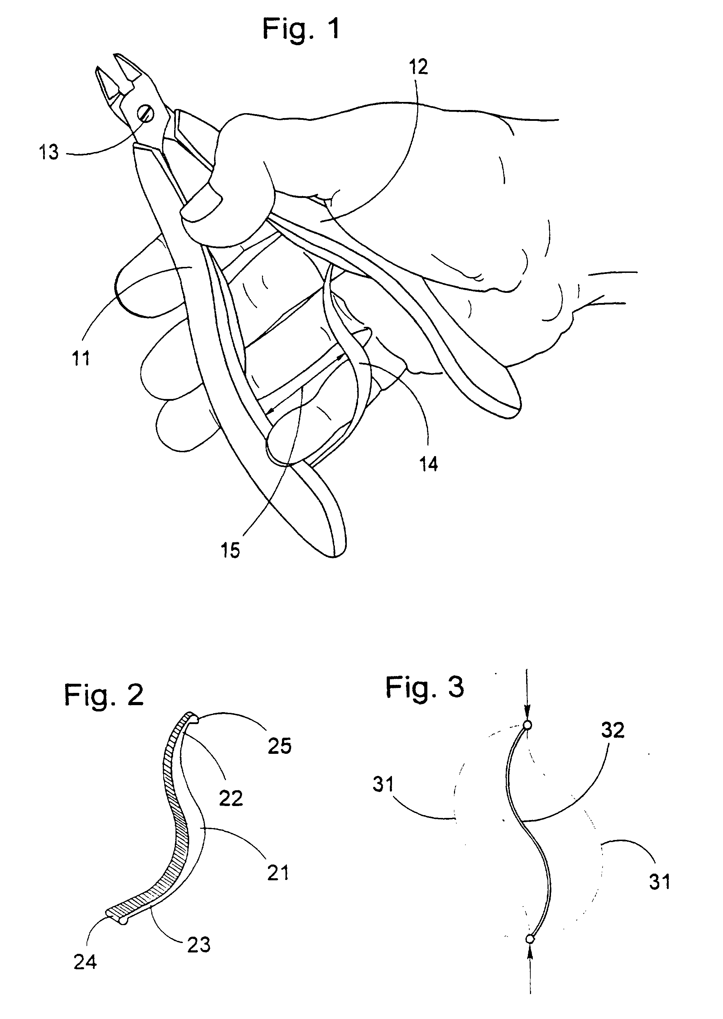

Simple S-shaped springs with constant cross-section have some disadvantages, however, due to a strongly diminishing force when the deformation increases, and to an unstable position for a strongly compressed spring, allowing it to snap between two equilibrium positions where the curvature is stronger at one end or the other. With such springs, it may be necessary to use especially stiff connections to the handles of the pliers, such as keyhole shaped, as mentioned in U S 4,801,019, or as described in the closest prior art SE 506 068, which is further discussed in connection with figure 3 and which represents prior art as disclosed in the preamble of claim 1.

The present invention concerns a spring with more constant force and with a stable equilibrium position which does not deform the connections to the handles, and which makes it easier to handle small delicate items.

### Description

The invention is described with reference to the figures, where figure 1 shows a plier with S-shaped return spring, figure 2 a S-shaped spring according to the invention, figure 3 a strongly compressed spring with constant cross-section.

A plier with S-shaped return spring is shown in figure 1, and comprises two shanks (11,12) connected at a joint (13). Between the shanks a S-shaped return spring (14) is located, which will open the plier when the operator reduces the force of his fingers on the handles of the plier. When holding small or delicate items in electronics or medical applications it is important that the force needed to counteract the return spring is small, fairly constant and uniquely defined, so that a change of equilibrium position of the spring does not cause dropping or deforming of the item. The spring should be such that the force of the fingers is noticeable already at beginning of the closing of the plier, but hardly increasing subsequently. Since the direction of the spring force changes when the handles are squeezed, it is acceptable that the spring force increases somewhat.

A simple S-shaped spring with constant cross-section, such as made from a bent metal strip, has a spring force which first increases sharply with increasing deformation, then reaches a flat maximum and finally decreases sharply. When the spring force decreases, the shape of the spring becomes unstable as shown in figure 3, with the central part tending to leave the symmetry line to make the spring look like a normal or reversed J (31) instead of the symmetric S-shape (32). If this occurs when the pliers is used, the spring may suddenly snap against the fingers pressing them against the handle part of the shank. The distance (15) between the central part of the spring and the shank should thus be kept relatively constant. The instability may also cause a sudden decrease of the spring force letting a greater part of the finger force act on the held item which may damage fragile items. In such cases it may be desirable to attach the ends of the spring to the shanks without angular mobility by means of keyhole-shaped slots as shown in SE 506 068.

Such slots are difficult to make with sufficient precision, and they make it difficult to relocate the spring to adjust the force to individual preferences. The present invention concerns a S-shaped spring where non-uniform cross-section ensures positional stability and corresponding reduced risk of snapping against the fingers, simpler adjustment of the force, simpler manufacture of the attachment slots and less risk of damage to small delicate items.

To avoid instability, the cross-section shall as shown in figure 2 have greater thickness in the central portion (21), gradually thinner towards the ends (22,23). Typical thickness is 1,8 mm at the center, reduced to 1,25 mm at the ends. A spring with such a thickness variation will have a stable equilibrium even when strongly compressed.

A spring with uniform cross-section may also loose stability by deforming out of the original bending plane. If used in a plier this implies a risk of disattaching from the handles and flying off. A spring according to the invention is preferably made with increased width (24) at least at one end and mated with a corresponding wider slot in one shank.

A spring with a thicker central portion and a corresponding stable deformation can be made to deviate to one preferred side by making the curved portion near a first end (23) longer than near the second end (22). The deformation of the spring can then be matched to the shape of the shank so that the increased bending of the first end portion (23) when the plier is closed will leave a basically constant distance (15) between the central portion (21) and the first shank (11) with enough room for a finger.

If the first end portion has a basically constant distance to the first shank, the second end portion (22) must change its angle relative to the second shank (12). The second end may then preferably be provided with a claw (25) which will grip the shank when the plier is open and the force small, to avoid being pulled out of the slot in the shank. When the plier is closed the spring force creates enough friction to keep the spring in the slot, but the claw (25) is then inactive, and the spring can be pushed to the side by hand for exchangeing or relocating.

A spring according to the invention with non-uniform cross-section can be made from many different materials, metallic as well as non-metallic. Because of the complicated shape, however, it is preferred to make it from a fiber reinforced polymer.

## Claims

1. A plier-like tool comprising a return spring (14) and two shanks having attachment slots for the return spring, the two shanks being pushed apart by said return spring, **characterized by** the return spring being attached to the shank with angular mobility and the return spring (14) being S-shaped when free, the return spring having a greatest thickness at a central portion (21) and less thickness at the end portions and having a first end portion (23), curved to a first direction, which first end portion is longer than a second end portion (22), curved to a second direction, so that the return spring has a stable equilibrium even when strongly compressed.

2. A plier-like tool according to claim 1, **characterized by** the return spring having a greater width (24) at a first end portion than at the central portion.

3. A plier-like tool according to claim 1, **characterized by** the return spring being provided with a claw (25) at the second end portion.

## Patentansprüche

1. Zangenartiges Werkzeug mit einer Rückholfeder (14) und zwei Schenkeln mit Anbringschlitzen für die Rückholfeder, wobei die beiden Schenkel von der Rückholfeder auseinandergestoßen werden, **dadurch gekennzeichnet, daß** die Rückholfeder an dem Schenkel mit Winkelbeweglichkeit angebracht ist und die Rückholfeder (14), wenn sie frei ist, S-förmig ist, die Rückholfeder eine größte Dicke an einem Mittelabschnitt (21) und geringere Dicke an den Endabschnitten hat sowie einen ersten Endabschnitt (23) hat, der in eine erste Richtung gekrümmt ist, wobei der erste Endabschnitt länger ist als ein zweiter Endabschnitt (22), der in eine zweite Richtung gekrümmt ist, so daß die Rückholfeder selbst dann ein stabiles Gleichgewicht hat, wenn sie stark zusammengedrückt wird.

2. Zangenartiges Werkzeug nach Anspruch 1, **dadurch gekennzeichnet, daß** die Rückholfeder an einem ersten Endabschnitt eine größere Breite (24) hat als an dem Mittelabschnitt.

3. Zangenartiges Werkzeug nach Anspruch 1, **dadurch gekennzeichnet, daß** die Rückholfeder an dem zweiten Endabschnitt mit einer Klaue (25) versehen ist.

## Revendications

1. Outil du genre pince comprenant un ressort de rappel (14) et deux branches comportant des fentes de fixation pour le ressort de rappel, les deux branches étant écartées par poussée du ressort de rappel, **caractérisé par le fait que** le ressort de rappel est fixé à la branche avec une mobilité angulaire et le ressort de rappel (14) est en forme de S au repos, le ressort de rappel ayant une plus grande épaisseur dans une partie centrale (21) et une moindre épaisseur aux parties d'extrémité et ayant une première partie d'extrémité (23), courbée dans une première direction, cette première partie d'extrémité étant plus longue qu'une seconde partie d'extrémité (22), courbée dans une seconde direction, de sorte que le ressort de rappel a un équilibre stable même lorsqu'il est fortement comprimé.

2. Outil du genre pince selon la revendication 1, **caractérisé par le fait que** le ressort de rappel a une largeur plus grande (24) à une première partie d'extrémité que dans la partie centrale.

3. Outil du genre pince selon la revendication 1, **caractérisé par le fait que** le ressort de rappel comporte une mâchoire (25) à la seconde partie d'extrémité.
